# EUROPÄISCHE PATENTANMELDUNG

(11) **EP 0 831 341 A2**
(43) Veröffentlichungstag der Anmeldung: **25.03.1998**
(21) Anmeldenummer: 97116140.1
(22) Anmeldetag: 17.09.1997
(51) Int. Cl.: G02B 5/18

(54) **Optisches Beugungsgitter auf der Basis eines porösem Materials**

(30) Priorität: 21.09.1996 DE 19638885
(71) Anmelder: FORSCHUNGSZENTRUM JÜLICH GMBH, 52425 Jülich (DE)
(72) Erfinder: Thönissen, Markus, 41334 Nettetal (DE); Vial, Jean-Claude, Dr., 3800 Grenoble (FR); Romestain, Robert, Dr., 38400 St. Martin d'Heres (FR); Lerondel, Gilles, 76760 Doudeville (FR)

(57) **Zusammenfassung**

Eine Schicht aus einem die optischen Eigenschaften durch Beleuchtung verändernden porösen Material umfaßt eine lichtseitige Oberfläche, auf welcher eine erste Struktur ausgebildet ist, die in Abhängigkeit von Phasenänderungen eines transmittierten oder reflektierten Lichtes an diesen periodischen Strukturen eine Spektralzerlegung des einfallenden Lichtes oder eine Ablenkung durchführt.

## Beschreibung

Die vorliegende Erfindung betrifft eine Schicht aus einem die optischen Eigenschaften durch Beleuchtung verändernden porösen Material.

Aus dem Stand der Technik ist z. B. eine solche Schicht aus porösem Silicium bekannt. Poröses Silicium (PS) ist aufgrund seiner Kompatibilität zur hochentwickelten Si-Mikroelektronik sowie seiner einfachen und preiswerten Herstellbarkeit ein vielversprechendes Material für Anwendungen in der Sensorik. Es ist zudem aufgrund seiner Elektrolumineszenz für Anwendungen im Bereich der Displaytechnologie geeignet. Letzterem kommt insofern eine große Bedeutung zu, als daß Display und Ansteuerung auf einem Chip integriert werden können. Vor allem in Hinblick auf die Verwendbarkeit von porösem Silicium als passives Material (z. B. der Einsatz als Filter in Farbdetektoren, Reflexionsfiltern) kommt diesem Material eine große Bedeutung zu. Bekannt ist sowohl die Herstellung von Interferenzfiltern aus porösem Silicium als auch die beleuchtungsunterstützte Strukturierung von porösem Silicium. Weiterhin ist die Änderung der strukturellen Eigenschaften von porösem Silicium durch die Beleuchtung der Proben während und nach der Herstellung sowie die Herstellung von konventionellen Beugungsgittern bekannt.

Die bekannten Verfahren und Schichten sind aber nur teuer und kompliziert herzustellen, so daß die Einsatzmöglichkeiten von solchen Beugungsgittern beschränkt bleibt.

Die Aufgabe der vorliegenden Erfindung ist daher, eine Schicht aus einem die optischen Eigenschaften durch Beleuchtung verändernden porösen Material zu schaffen, die einfach und preiswert herzustellen und vielseitig verwendbar ist.

Die Aufgabe wird dadurch gelöst, daß auf einer lichtseitigen Oberfläche lateral eine erste Struktur ausgebildet ist, die in Abhängigkeit von Phasenänderungen eines transmittierten oder reflektierten Lichtes an diesen periodischen Strukturen eine Spektralzerlegung des einfallenden Lichtes oder eine Ablenkung durchführt.

Die erfindungsgemäße Schicht mit einem oder mehreren Beugungsgittern auf der Basis eines porösen Materials ermöglicht die einfache und preiswerte Herstellung von Reflexionsgittern, die z. B. in einer Vielzahl von Problemstellungen in der Spektroskopie für die Spektralzerlegung von Licht und die Analyse des spektralzerlegten Lichtes nützlich sein können.

Weitere Vorteile der vorliegenden Erfindung sind in den Unteransprüchen 2 bis 12 aufgeführt. So lassen sich z. B. gemäß Anspruch 10 oder 11 Bauelemente herstellen, in denen sich photonische Bandlücken (photonic bandgaps) ausbilden.

Die Aufgabe wird auch durch eine Schichtanordnung gemäß Anspruch 15 gelöst. Weitere vorteilhafte Merkmale der Schichtanordnung sind in den Unteransprüchen 16 und 17 angeführt.

Ausführungsformen der vorliegenden Erfindung werden im folgenden anhand der Zeichnungen näher beschrieben. Es zeigen:
- Fig. 1: ein Photo eines Reflexionsgitter auf porösem Silicium;
- Fig. 2: eine schematisch Darstellung eines Aufbaus zur Abbildung von Interferenzmustern auf einer Schichtoberfläche;
- Fig. 3: eine schematische Draufsicht aufeine Schicht mit zwei Beugungsgittern unterschiedlicher Periodizitäten und Orientierung;
- Fig. 4: eine schematische Seitendarstellung eines lateralen Beugungsgitters mit darunterliegendem Interferenzübergitter durch Tiefenvariation der Porosität;
- Fig. 5: eine schematische Darstellung der Schicht aus Fig. 4 mit photonischen Bandlücken;
- Fig. 6: eine schematische Darstellung einer ersten Kombination von lateralen Beugungsgittern mit Wellenleiterstrukturen;
- Fig. 7: eine schematische Darstellung einer zweiten Kombination von lateralen Beugungsgittern mit Wellenleiterstrukturen.

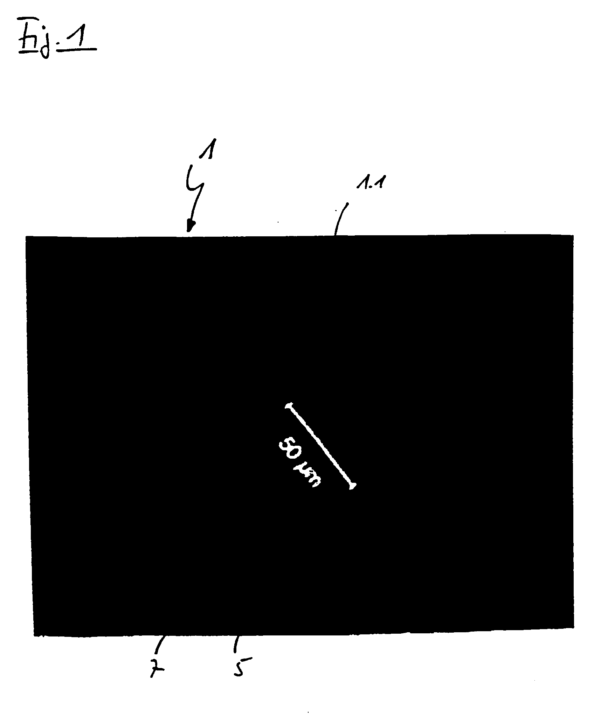

Fig. 1 zeigt ein Photo einer Schicht 1 mit einem Reflexionsgitter 3, das deutlich helle und dunkle Bereiche 5.1, 5.2 nebeneinander aufweist, die einer ersten Struktur 5 mit unterschiedlicher Porosität entsprechen. Hergestellt wurde dieses Reflexionsgitter 1 mit Hilfe einer Interferogrammabbildung einer Zweistrahl-Laserinterferenz auf einer Oberfläche 1.1 der Schicht 1. Die Probe wurde in diesem Fall nach dem Ätzprozess beleuchtet, wobei ein photochemisches Ätzen die Unterschiede 5.1, 5.2 in der Struktur 5 bewirkt.

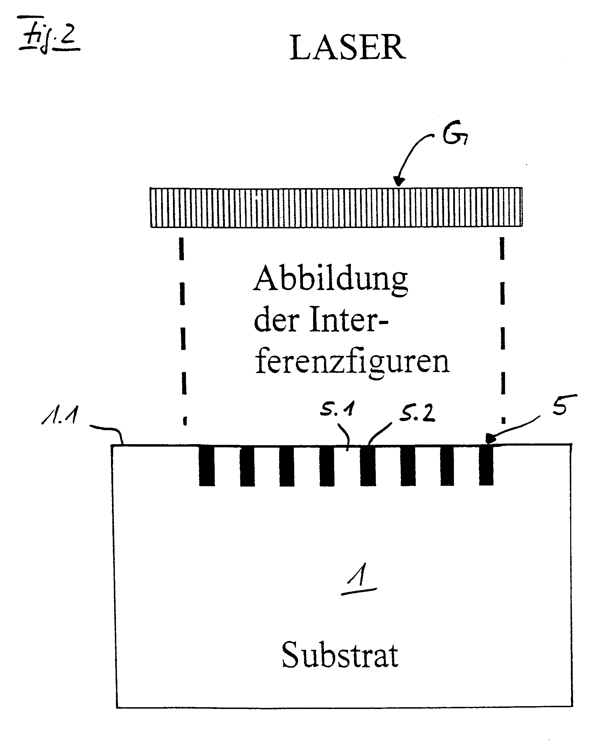

Fig. 2 zeigt einen beispielhaften Aufbau zur Abbildung von Interferenzmustern auf die Probenoberfläche. Eine hier verwendete Interferenz an einem Gitter G bewirkt die Abbildung von streifenförmigen Bereichen 5.1, 5.2 der ersten Struktur 5 auf der Oberfläche 1.1.

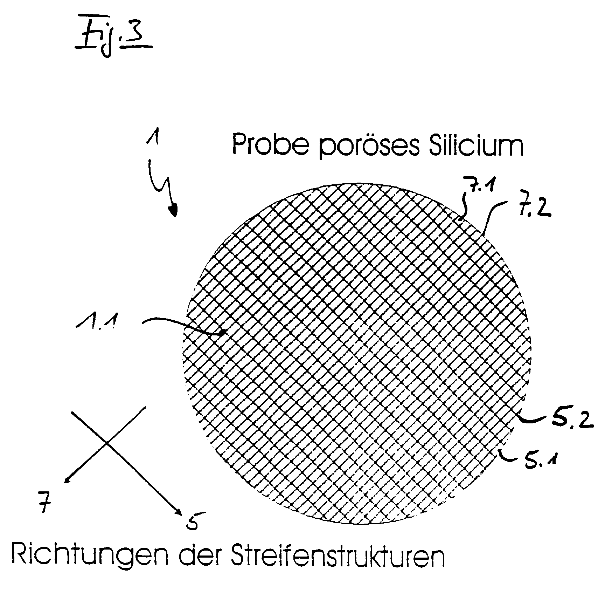

Fig. 3 zeigt die poröse Schicht 1 in Draufsicht nach Herstellung der ersten Strukur 5 mit den Bereichen 5.1 und 5.2 und einer zweiten Struktur 7 mit einem ersten Bereich 7.1 und einem zweiten Bereich 7.2, die sich jeweils periodisch ändern (Beugungsgitter). In diesem Falle ist die Struktur 7 mit den Bereichen 7.1, 7.2 in einer Ebene senkrecht zu der Struktur 5 mit den Bereichen 5.1, 5.2 ausgerichtet. Es ist aber auch denkbar, eine andere Ausrichtung der beiden Strukturen 5, 7 zu wählen. In anderen Ausführungsformen können auch mehr als zwei Strukturen 5, 7 auf der Oberfläche 1.1 ausgebildet sein. Es können somit 1- oder 2-dimensionale Beugungsgitter hergestellt werden.

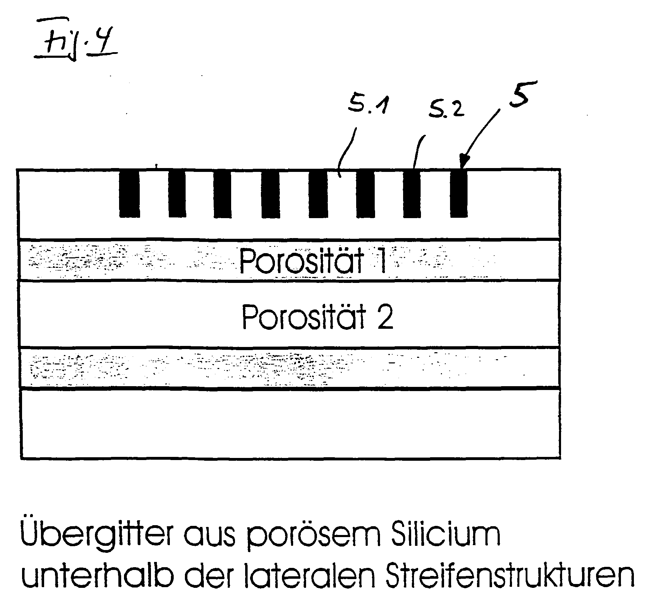

In Fig. 4 ist eine seitliche Ansicht der lateralen Struktur 5 (Beugungsgitter bzw. Reflexionsgitter) mit einem darunterliegendem Interferenzübergitter durch Tiefenvariation der Porosität dargestellt. Es können somit auch 3-dimensionale Beugungsgitter hergestellt werden. Auch hier könnten in anderen Ausführungsformen die laterale Struktur 7 oder , wie in Fig. 3 dargestellt, beide Strukturen 5 und 7 vorgesehen sein.

Vorstellbar ist eine Realisierung eines solchen Beugungsgitters z. B. mit Hilfe einer durch Zweistrahllaserinterferenz gewonnenen Abbildung eines Interferogrammes auf dem porösen Silicium bzw. dem zu ätzenden Substrat (Schicht 1). Durch die Abbildung von hellen und dunklen Streifen auf der Oberfläche 1.1 des porösen Siliciums werden durch den beleuchtungssensitiven Ätzprozeß verschiedene, periodisch aufeinanderfolgende Bereiche (Streifen) 5.1, 5.2 bzw. 7.1, 7.2 mit unterschiedlichen strukturellen Eigenschaften auf der Oberfläche 1.1 der porösen Schicht 1 hergestellt. Durch diese laterale Änderung der strukturellen Eigenschaften des porösen Siliciums können somit die für ein Beugungsgitter notwendigen, periodischen Streifen z. B. durch die oben genannte Abbildung eines Interferogrammes auf der Oberfläche des porösen Siliciums erzeugt werden (holographische Abbildung).

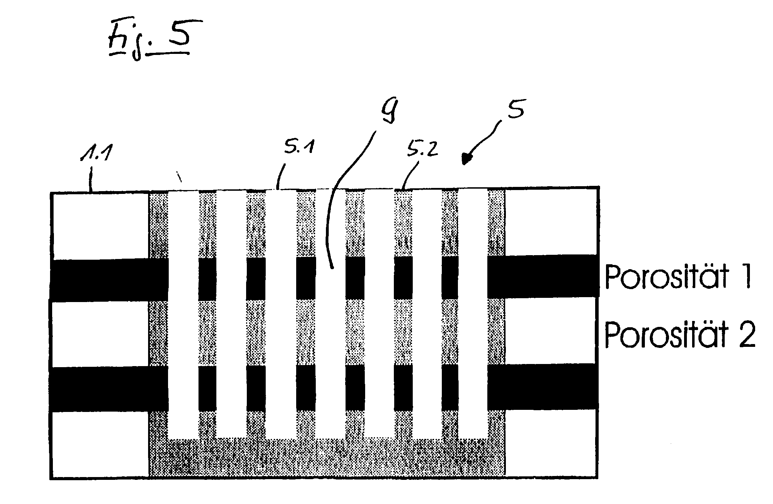

In Fig. 5 ist die Ausbildung photonischer Bandlücken 9 dargestellt. Die durch den Ätzprozess verursachten strukurellen Änderungen setzen sich bis in den Bereich der Tiefenänderung der Porosität - hier in diesem Fall der diskreten Änderungen zwischen Porosität 1 und 2 in der Tiefe - fort.

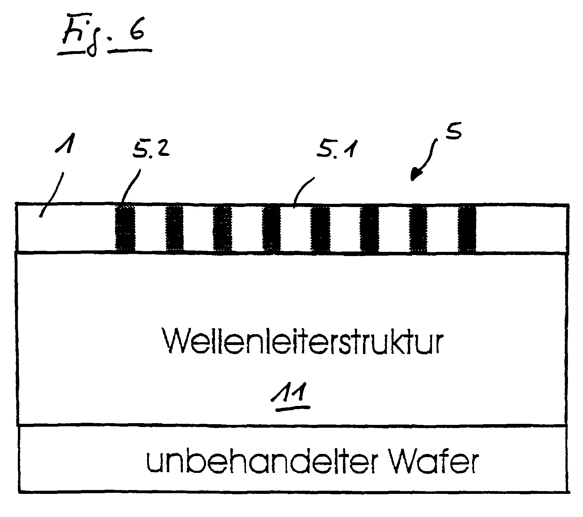

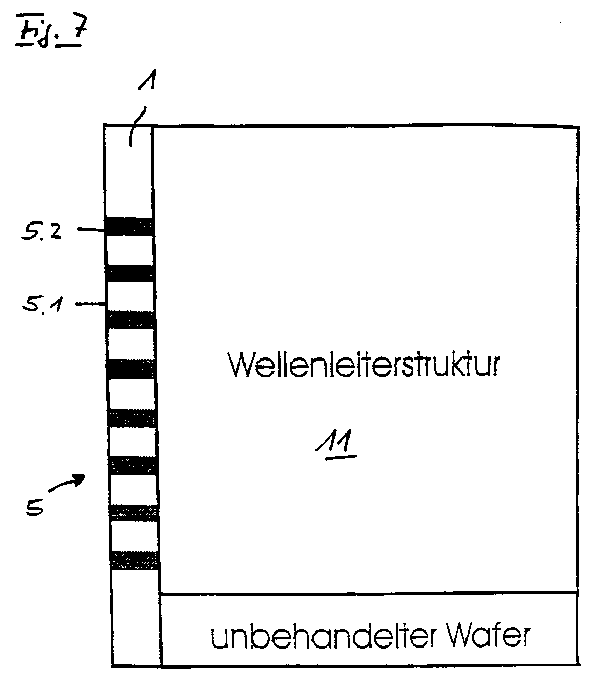

In Fig. 6 und Fig. 7 sind eine erste bzw. zweite Kombination von Beugungsgittern (Struktur 5, 7) mit einer Wellenleiterstruktur 11 aus porösem Silicium dargestellt. Durch die Anordnung des optischen Beugungsgitters auf einer Wellenleiterstruktur 11 (Fig. 6) bzw. seitlich an einer Stirnfläche der Wellenleiterstruktur 11 (Fig. 7) läßt sich Licht in den Wellenleiter von oben bzw. von der Seite einkoppeln. Der als Wellenleiterstrukur 11 bezeichnete Bereich kann z. B. ein Fabry-Perot-Filter sein, so daß das in die Struktur gebeugte Licht von der Kavität des Fabry-Perot-Filters geleitet werden kann. Mit Hilfe der Beugungsgitter kann auf einem einzigen Chip z. B. ein Michelson-Interferometer aufgebaut werden (integrated optics). Durch geeignete Anordnung können die Beugungsgitter oder Kavitäten als Bragg-Reflektoren (Spiegel) bzw. halbdurchlässige Spiegel benutzt werden.

Beide Arten erlauben sowohl die Wahl des Einfallswinkels als auch die Wellenlänge des in den Wellenleiter 11 einzukoppelnden Lichtes. Die hier aufgeführten Möglichkeiten dienen nur als Beispiel und ersetzen die momentan üblichen Einkopplungsmöglichkeiten über Prismen.

Weiterhin können die Beugungsgitter als wellenlängensensitive Spiegel in Wellenlleitern benutzt werden. Die Struktur 5 und/oder 7 des Beugungsgitters auf oder seitlich an einer lichtführenden Schicht eines Wellenleiters 11 beeinflußt das durch den Wellenleiter geführte Licht. Bestimmte Wellenlängen können somit gespiegelt oder sogar absorbiert werden.

Die erfindungsgemäße Schicht läßt sich wie folgt zusamenfassen:
1. Die Schicht aus porösem Silicium, SiGe, Aluminium oder GaAs, bei der die Oberfläche oder die gesamte Schicht lateral struktuelle, periodische Änderungen (z. B. Streifen) aufweist, soll optische Eigenschaften aufweisen, derart, daß aufgrund von Phasenänderungen des transmittierten oder reflektierten Lichtes an diesen periodischen Strukturen eine Spektralzerlegung des einfallenden Lichtes oder eine Ablenkung durchgeführt wird. Eine Realisierung kann z. B. durch die Abbildung von Interferogrammen (z. B. Zweistrahlinterferenz) auf der Probenoberfläche während oder nach dem elektrochemischen Ätzprozeß von porösem Silicium erfolgen (siehe Fig. 1 und 2).
2. Die Schicht soll optische Eigenschaften haben wie die Schicht unter 1., jedoch daß eine oder mehrere strukturelle periodische Änderungen mit gleichen oder anderen Periodizitäten auf ein und der gleichen Schicht hergestellt werden. Vorstellbar ist z. B., daß die Schicht nach der Herstellung der ersten periodischen Struktur mit dem unter 1. genannten Verfahren der Abbildung eines Interferogrammes um 90° gedreht wird und anschließend der Ätzprozeß fortgesetzt wird. Es entsteht ein zu dem ersten Streifenmuster senkrechtes Streifenmuster und somit ein weiteres Beugungsgitter, dessen optische Eigenschaften anders als die vom ersten Beugungsgitter sein können (siehe Abb. 3). Durch Drehung der Probe können somit unterschiedliche Phasenänderungen erzielt werden. Durch dieses Verfahren kann z. B. ein 2-dimensionales Beugungsgitter hergestellt werden.
3. Die Schicht soll optische Eigenschaften haben wie die Schicht unter 1. und 2., jedoch mit zusätzlicher z. B. periodischer oder gradueller Änderung der Porosität in der Tiefe. Die Kombination der lateralen Änderung der Struktur auf der Oberfläche oder im oberflächennahen Bereich mit den bekannten Interferenzfiltern, bei denen die Porosität in der Tiefe geändert wird, aus porösem Silicium ermöglicht somit die Herstellung von mehrdimensionalen (2D, 3D) Beugungsgittern.

## Patentansprüche

1. Schicht aus einem die optischen Eigenschaften durch Beleuchtung verändernden porösen Material,
**dadurch gekennzeichnet,**
daß auf einer lichtseitigen Oberfläche (1.1) lateral eine erste Struktur (5) ausgebildet ist, die in Abhängigkeit von Phasenänderungen eines transmittierten oder reflektierten Lichtes an dieser Struktur (5) eine Spektralzerlegung des einfallenden Lichtes oder eine Ablenkung durchführt.

2. Schicht nach Anspruch 1,
**dadurch gekennzeichnet,**
daß die erste Struktur (5) in der ganzen Schicht (1) ausgebildet ist.

3. Schicht nach Anspruch 1 oder 2,
**dadurch gekennzeichnet,**
daß die erste Struktur (5) sich periodisch ändernde Bereiche (5.1, 5.2) aufweist.

4. Schicht nach einem der Ansprüche 1 bis 3,
**dadurch gekennzeichnet,**
daß auf der lichtseitigen Oberfläche (1.1) Interferogramme abgebildet sind.

5. Schicht nach einem der Ansprüche 1 bis 4,
**dadurch gekennzeichnet,**
daß auf der lichtseitigen Oberfläche (1.1) wenigstens eine zweite Struktur (7) ausgebildet ist.

6. Schicht nach Anspruch 5,
**dadurch gekennzeichnet,**
daß die zweite Struktur (7) sich periodisch ändernde Bereiche (7.1, 7.2) aufweist.

7. Schicht nach Anspruch 5 oder 6,
**dadurch gekennzeichnet,**
daß die zweite Struktur (7) andere optische Eigenschaften als die erste Struktur (5) aufweist.

8. Schicht nach einem der Ansprüche 5 bis 7,
**dadurch gekennzeichnet,**
daß die erste Struktur (5) und die zweite Struktur (7) in der gleichen Ebene liegen und in einem Winkel zueinander ausgerichtet sind.

9. Schicht nach einem der vorstehenden Ansprüche,
**dadurch gekennzeichnet,**
daß sich die Porosität des Materials mit der Tiefe periodisch ändert.

10. Schicht nach Anspruch 9,
**dadurch gekennzeichnet,**
daß sich die Porosität des Materials mit der Tiefe graduell verändert.

11. Schicht nach Anspruch 9 oder 10,
**dadurch gekennzeichnet,**
daß photonische Bandlücken (9) ausgebildet sind.

12. Schicht nach Anspruch 11,
**dadurch gekennzeichnet,**
daß sich die Strukturen (5, 7) bis in den Tiefenbereich der Porositätsänderung erstrecken und die photonischen Bandlücken (9) bilden.

13. Schicht nach einem der vorstehenden Ansprüche,
**dadurch gekennnzeichnet,**
daß das poröse Material ein Material aus der Gruppe bestehend aus porösem Silicium, SiGe, Aluminium oder GaAs ist.

14. Schichtanordnung mit einer Schicht nach einem der vorstehenden Ansprüche,
**dadurch gekennzeichnet,**
daß die Schicht (1) mit einem Wellenleiter (11) aus porösem Silicium verbunden ist.

15. Schichtanordnung nach Anspruch 14,
**dadurch gekennzeichnet,**
daß die Schicht (1) über dem Wellenleiter (11) angeordnet ist.

16. Schichtanordnung nach Anspruch 15,
**dadurch gekennzeichnet,**
daß die Schicht (1) seitlich an dem Wellenleiter (11) angeordnet ist.

17. Schichtanordnung nach einem der Ansprüche 14 bis 16,
**dadurch gekennzeichnet,**
daß der Wellenleiter (11) aus einem Bragg-Reflektor besteht.

18. Schichtanordnung nach einem der Ansprüche 14 bis 16,
**dadurch gekennzeichnet,**
daß der Wellenleiter (11) aus einem Fabry-Perot-Filter besteht.
